# EUROPEAN PATENT SPECIFICATION

(11) **EP 0 326 300 B1**
(45) Date of publication and mention of the grant of the patent: **28.04.1993**
(21) Application number: 89300586.8
(22) Date of filing: 23.01.1989
(51) Int. Cl.: B60J 1/17

(54) **Glass construction for an automobile**
Glasscheibengestaltung für ein Kraftfahrzeug
Construction de la table de verre pour un véhicule automobile

(30) Priority: 25.01.1988 JP 15531/88
(43) Date of publication of application: 02.08.1989
(73) Proprietor: Mazda Motor Corporation, Aki-gun Hiroshima-ken (JP)
(72) Inventor: Kishino, Koji, Aki-gun Hiroshima-ken (JP)
(74) Representative: Brooke-Smith, Fred

(56) References cited:
- EP-A- 0 086 962
- DE-A- 3 037 397
- FR-A- 2 343 113

## Description

This invention relates to a side window construction for an automobile.

Glass which curves in a single dimension in a vertical direction is in general use for an automobile for the purpose of improving aerodynamic characteristics and outward appearance. One construction of this kind is described in EP-A-0086962.

In the case of glass curved in a single dimension for side doors, for example, which is set movably in vertical direction, the guide rails, door sashes, etc. which guide the glass in its up-and-down motion are almost the same in construction as in the case of the glass construction in which planar glass is movable up and down, and are curved only in substantially the same curvature as the curvature of glass.

It has recently been suggested to use front side doors with windows in which the glass is curved in two dimensions, i.e. in an up-and-down direction and also in a direction at right angles to the up-and-down direction so that when the window is in a raised position (closed position), to enable an upper part on the front edge side of the glass to be located more inwardly of a car body than an upper part on the rear edge side, thereby improving aerodynamic characteristics and outward appearance (see e.g. DE-A-3037397).

In the case of the glass construction using glass curved in two dimensions, however, the glass involves higher manufacturing costs than plane glass and glass curved in a single dimension and it is required to use guide rails, door sashes, etc. of special construction because of the difference in shape between the front and rear edge portions of the glass and other factors. Thus, it is feared that use of curved in two dimensions glass lacks reliability in respect of sealability and other points.

An object of the present invention is to improve aerodynamic characteristics and outward appearance of the side door glass for an automobile by using glass curved in a single dimension which is so designed and arranged that, of its front edge portion and rear edge portions, one is positioned nearer to the vertical longitudinal centre line of the car body than the other, as in the case of curved in two dimensions glass, thereby improving aerodynamic characteristics and outward appearance. The glass used in the present invention is sheet glass that curves in only one direction, as would be obtained by cutting off a part of a cylindrical glass or a conical glass.

According to the present invention there is provided in or for an automobile a side window construction comprising a glass curved in a single dimension about an axis characterized in that at least the top edge of the glass is inclined with respect to lines parallel to the axis whereby the intersections of said top edge with the front and rear edges of the glass are at different distances from the central vertical lengthwise plane of symmetry of the automobile.

In the present invention having the above glass construction, the part-circular curves of the glass which extend in an up-and-down direction are inclined with respect to the vertical direction and therefore when viewed along a horizontal line, the upper end edge portion of the glass which is substantially parallel with the horizontal line presents such an appearance that, of its front and rear edges, one is positioned nearer the vertical lengthwise plane of symmetry of the car body than the other. This enables us to improve aerodynamic characteristics and outward appearance as in the case of glass curved in two dimensions, while ensuring cheapness of glass manufacturing costs and reliability in sealability, etc.

The invention as defined in the claims will be made more clear by reading the following description of the present invention, with reference to the accompanying drawings in which:
Figs. 1 to 5 show the first embodiment of the present invention, of which Fig. 1 is a front view of the front side door, Fig. 2 is a side view of the above front side door (however, Fig. 1 and Fig. 2, each composing member is shown as if it were seen through so as to show the construction of a door glass), Fig. 3, Fig. 4 and Fig. 5 are cross-sections, on an enlarged scale, taken along the line III-III, the line IV-IV and the line V-V respectively in Fig. 1;
Fig. 6 through to Fig. 9 show the second embodiment of the present invention, in which Fig. 6 corresponds to Fig. 1, Fig. 7 corresponds to Fig. 2, and Fig. 8 and Fig. 9 are cross-section, taken along the line VIII-VIII and the line IX-IX respectively in Fig. 6;
Fig. 10 through to Fig. 13 show the third embodiment, in which Fig. 10 corresponds to Fig. 1, Fig. 11 corresponds to Fig. 2 and Fig. 12 and Fig. 13 are cross sections, on an enlarged scale, taken along the line XII-XII and the line XIII-XIII respectively in Fig. 10;
Fig. 14 is a plan view, showing the right half of an automobile for explaining the position of a central axis of curvature of a glass in the first, second and the third embodiments;
Fig. 15 through to Fig. 17 are explanatory drawings for explaining the reason why the central axis of curvature of a door glass is slanted, in which Fig. 15(a), Fig. 16 and Fig. 17(a) are plan views of a glass having a cylindrical surface, Fig. 15(b) is a left side view of Fig. 15(a), and Fig. 17(b) and Fig. 17(c) are a left side view and a top view respectively of Fig. 17(a);
Fig. 18 and Fig. 19 are a front view and a plan view respectively of an automobile provided with a door glass construction of a front side door according to the present invention;
Fig. 20 and Fig. 21 are a front view and a plan view respectively of a conventional automobile;
Fig. 22 is a rough plan view of an apparatus to be used for processing a glass curved in a single dimension;
Figs. 23, 24, 25 and 26 are cross-sections, taken along the line A-A, the line B-B, the line C-C and the line D-D respectively in Fig. 22;
Fig. 27 and Fig. 28 show modified embodiments, in which Fig. 27 corresponds to Fig. 14 and Fig. 28 is a type drawing of a door glass of the front side door, as seen from the front of a vehicle;
Fig. 29 through to Fig. 31 show different modified embodiments, in which Fig. 29 and Fig. 30 are a back view and a plan view respectively of an automobile provided with a rear side glass according to the present invention and Fig. 31 is a cross-section, on an enlarged scale, taken along the line XXXI-XXXI in Fig. 30;
Fig. 32 is a plan view, showing actual measurements of the door glass of the front side door; and
Fig. 33 is a part of the cross section, on an enlarged scale, taken along the line XXXIII-XXXIII in Fig. 32.

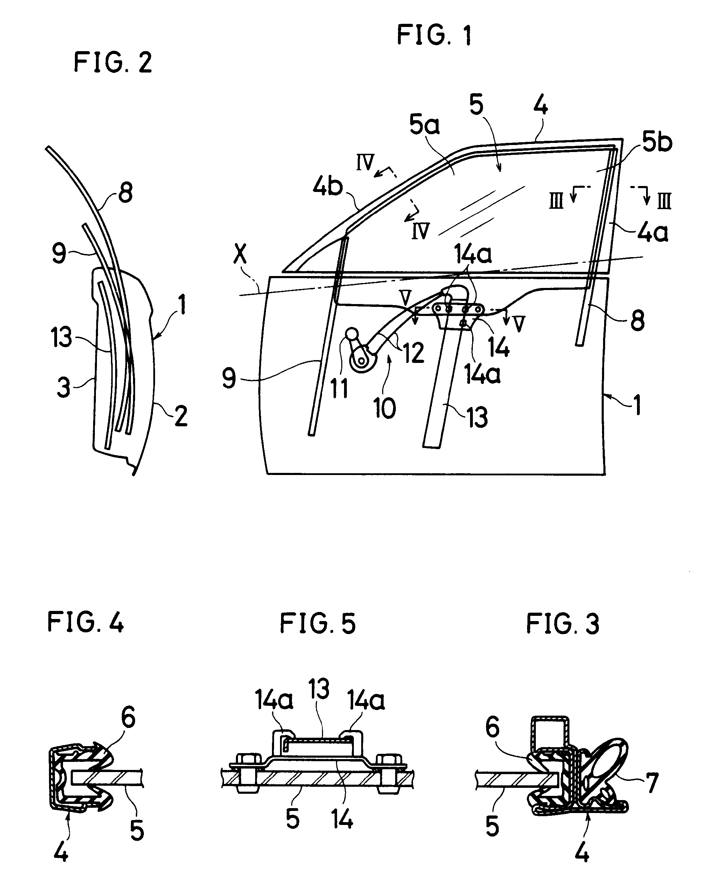

Fig. 1 and Fig. 2 show the first embodiment, in which the present invention was applied to the window construction of the general sash-type for the front side door of an automobile. Reference numeral 1 designates the body of a front side door, comprising an outer panel 2 and an inner panel 3. The door body 1 is provided with a door sash 4 projecting upwardly. As shown in Fig. 3 and Fig. 4, a window pane of glass 5 is held along the circumferential edge thereof by a channel 6 in the door sash 4. In Fig. 3, reference numeral 7 designates a weather strip mounted on the door sash 4. When the front side door is shut, the weather strip 7 makes contact with a center pillar of the car body for sealing.

A leg portion 4a at the rear of the door sash 4 carries a guide rail 8 which guides a rear edge of the door glass 5 in the up and down movement of the glass 5. The guide rail 8 extends into the body 1 of the door and guides the glass 5 in its whole up and down stroke. Connected to an inclined leg portion 4b in the front of the door sash 4 is a guide rail 9 which guides the front edge of the glass 5 in its up and down motion. This guide rail 9 also extends deeply into the door body 1.

Reference numeral 10 designates a driving means of cable type which makes the glass 5 fitted to the inner panel 3 of the door body 1 go up and down. Although the composition of the driving means 10 is not illustrated fully in the drawing, it is so designed that when an operation handle 11 inside the car body is turned, its turning force is transmitted by a cable 12 as tractive force in vertical direction to the glass 5, whereby the glass 5 is caused to move up and down. Reference numeral 13 designates a guide member which is fitted to the inner panel 3 and extends substantially in vertical direction. As shown in Fig. 5, the guide member 13 guides the glass 5 in its up-and-down motion, in concert with a slider 14a of a plate 14 fitted to the center of a lower part of the glass 5.

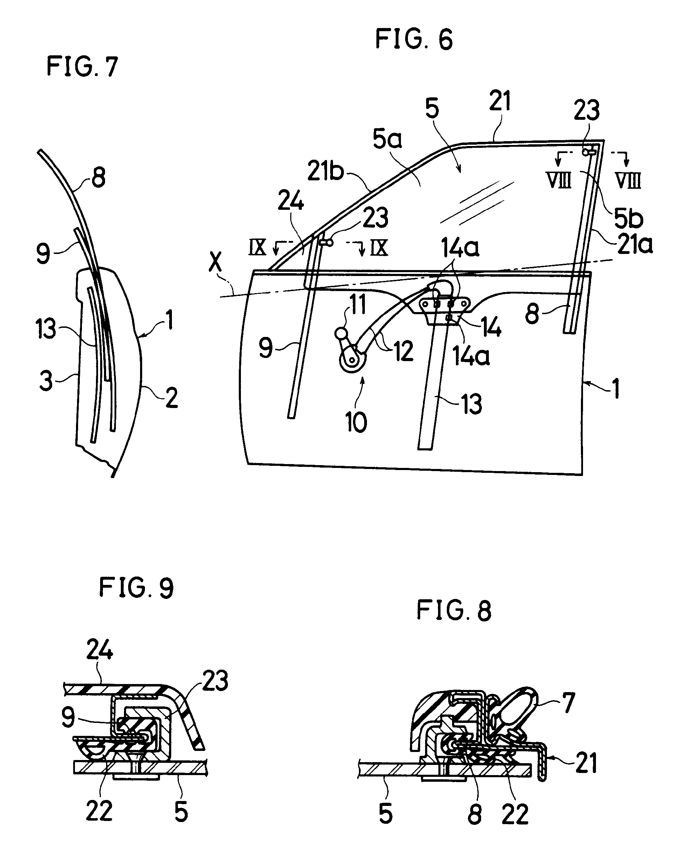

Fig. 6 and Fig. 7 show the second embodiment of the present invention, in which the present invention is applied to the window construction of the inner sash type front side door. In the inner sash type front side door, as shown in Fig. 8 a door sash 21 which forms a window frame is positioned inwardly of the glass 5, when the window glass 5 is in its top position (i.e. the window is closed), and is incorporated in the door body 1. The door sash 21 is provided with a weather strip 22 which makes contact with a circumferential edge part of the inner surface of the door glass 5 for sealing.

Similarly to the case of the first embodiment, a leg portion 21a at the rear of the door sash 21 composes the guide rail 8 extending into the door body 1 and a leg portion 21b slanting at the front of the door sash 21 is connected with a top end of the guide rail 9 extending deeply into the door body 1. As illustrated in Fig. 8 and Fig. 9, sliders 23 which are slidable along the guide rails 8, 9 are fitted to the rear and front edge upper parts respectively of the glass. By the co-operative action of the sliders 23 and the guide rails 8, 9, the door glass 5 is guided in its up-and-down motion. Reference numeral 24 designates a corner member provided at a corner part formed between the door body 1 and the leg portion 21b at the front of the door sash 21. The front side door and other composition are the same as in the case of the first embodiment. Like reference numerals are given to the like members and explanation of them is omitted.

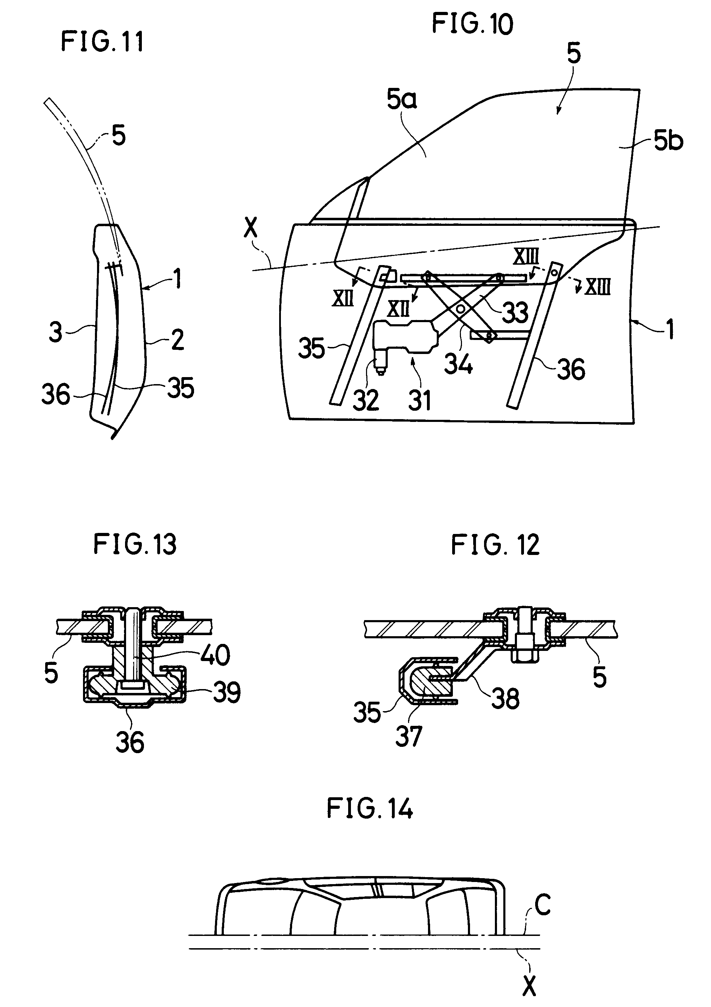

Fig. 10 and Fig. 11 show the third embodiment, in which the glass construction of the present invention was applied to the front side door of hard top type (sashless type). In this hard top front side door, a driving means 31 which causes the door glass to make up-and-down motion is of X arm type incorporated in the door body 1. By the operation of a driving motor 32, a main arm 33 and a subarm 34 connected to each other in X-shape do the motion of changing relative angles, whereby the door glass 5 is caused to do up-and-down motion.

Provided in the door body 1 are guide rails 35, 36 which extend substantially in vertical direction on both sides (in front and the rear respectively) of the driving means 31. On the other hand, as shown in Fig. 12, a slider 37 slidable along the guide rail 35 in the front is fitted at a lower edge front part of the door glass 5 through the medium of a fitting member 38 and as shown in Fig. 13, a roller 39 which is rollable in the guide rail 36 is fitted at a lower edge rear part of the door glass 5 through the medium of a support axis 40. By this arrangement, the door glass 5 is guided in its up-and-down motion along the guide rails 35, 36.

In each of the door glass constructions in the above embodiments, the door glass 5 is curved in a single dimension and, when raised, extends upwardly and inwardly. As shown in Fig. 1, Fig. 6 and Fig. 10, the central axis X of curvature is set at the level near the boundary line between the door glass 5 and the body 1. Also, the central axis X of curvature slants forwardly and downwardly and, as shown in Fig. 14, is set in parallel with the longitudinal vertical plane of symmetry C of the car body. Two front and rear guide rails 8, 9 or 35, 36 which guide the two-dimensional door glass 5 in its up-and-down motion are also curved inwardly of a car room in a direction corresponding to the two-dimensional glass 5 and their curvature is set at almost the same curvature as the curvature of the door glass 5. On the other hand, the curvature centers of the guide rails 8, 9 or 35, 36 are set at different positions so as to correspond to the difference in the position of curvature center in vertical direction between the front part and the rear part of the two-dimensional glass, namely, the position of curvature center of the guide rail 9 or 35 in the front is set lower than that of the guide rail 8 or 36.

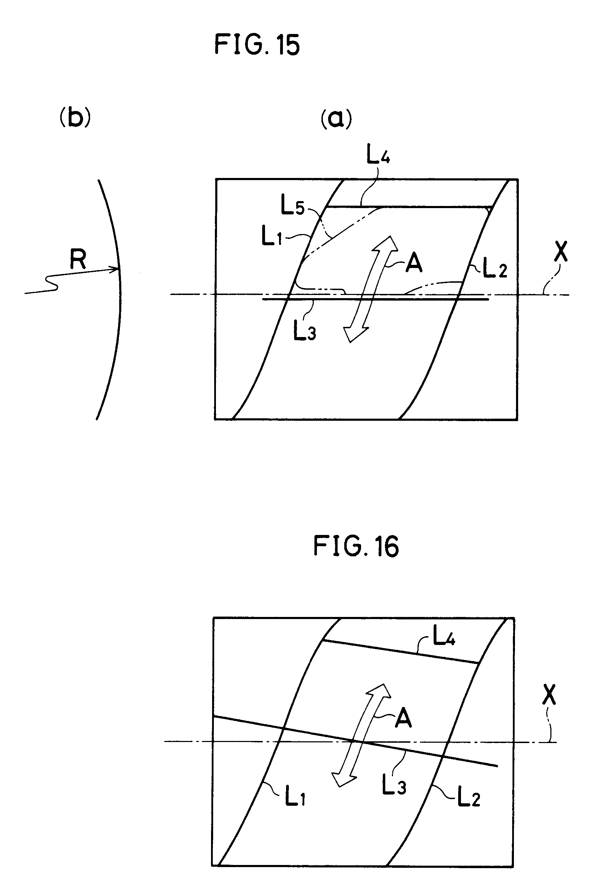

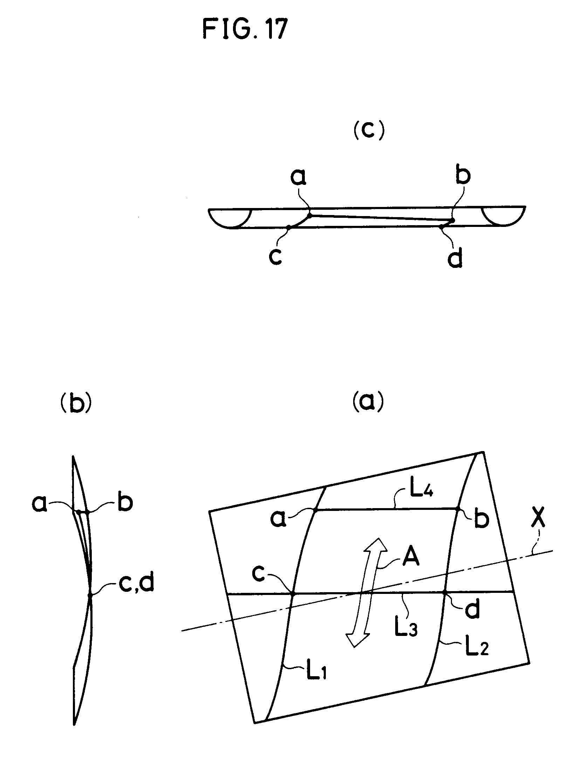

In the door glass construction in each of the above embodiments, the reason why the central axis of curvature of the two-dimensional glass 5 was set slanted forwardly and downwardly in relation to a horizontal line in longitudinal direction of a car body is explained below, with reference to Fig. 15 and Fig. 17. Fig. 15(a) and Fig. 15(b) are a plan view and a left side view respectively of a glass having a cylindrical surface with a radius of curvature R. Curved lines L₁, L₂ on the glass surface in parallel with each other are curves which would become straight lines if the curved surface were flattened into planar form. Therefore, in the case where a front edge and a rear edge of the door glass are set in such a fashion that they are positioned on the curved lines L₁, L₂ respectively, when the door glass is moved up and down it is possible to slide it to some extent in longitudinal direction of a car body, as shown by the arrow A. Thus, in the conventional door glass construction for an automobile using glass curved in a single dimension, a line along the lower end edge L₃ of the door glass is disposed parallel to the central axis X of curvature (central axis of a cylinder) of the glass and an upper edge of the door glass is set on a straight line L₄ which is in parallel with the straight line L₃. Under this arrangement, the door glass is taken out of the area enclosed by the two straight lines L₃, L₄ and the two curved lines L₁, L₂, as outlined by chain line L₅.

Instead of the above method of shaping a door glass, the following method is adopted, namely, as shown in Fig. 16, lines L₃ and L₄ are set slanted in relation to the central axis X of curvature of a glass and the glass is taken out of the area enclosed by the two lines L₃, L₄ and the two curved lines L₁, L₂. In this case, as a front edge and a rear edge of the door glass are set to be positioned on the curved lines L₁, L₂ respectively as stated before, it is of course possible to slide the door glass in longitudinal direction of a car body when the door glass moves up and down.

It will be understood that just as L₁ and L₂ represent curved edges of the resulting glass sheet L₃ and L₄ in Figure 16 also represent curved edges of the sheet, because none of lines L₁-L₄ in Figure 16 extends parallel to the axis of the cylindrical surface.

Fig. 17(a) shows the state where the glass shown in Fig. 16 is turned to bring the line L₃ to a substantially horizontal level (the state where the central axis X of curvature of the glass is positioned downward gradually as it moves toward the left side). Fig. 17(b) and Fig. 17(c) are a left side view and a top view respectively of the glass which is in the state shown in Fig. 17(a). As can be seen from Figs. 17(a), (b) and (c), when a comparison is made between the intersecting point "a" of the lines L₄ and L₁ (the point corresponding to a front edge upper part side of the door glass 5) and the intersecting point "b" of the lines L₄ and L₂ (the point corresponding to a rear edge upper part side of the door glass 5), the intersecting point "a" is more upward than the intersecting point "b" in relation to the central axis X of curvature of the glass and therefore the former is positioned inwardly of the curved direction of the glass the more. The intersecting point "c" of the lines L₃ and L₁ (the point corresponding to a front edge lower part side of the door glass 5) and the intersecting point "d" of the lines L₃ and L₂ (the point corresponding to a rear edge lower part side of the door glass 5) are in almost the same position in relation t the curved direction of the glass.

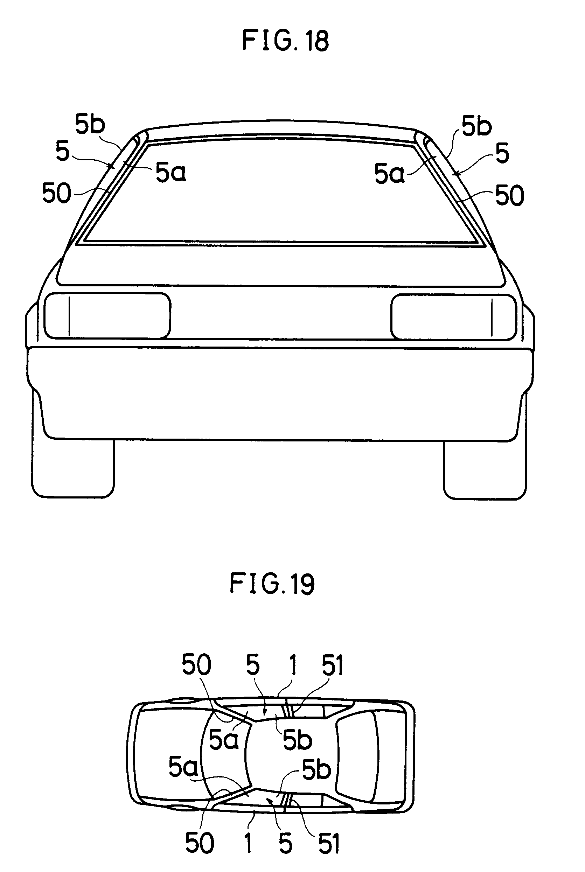

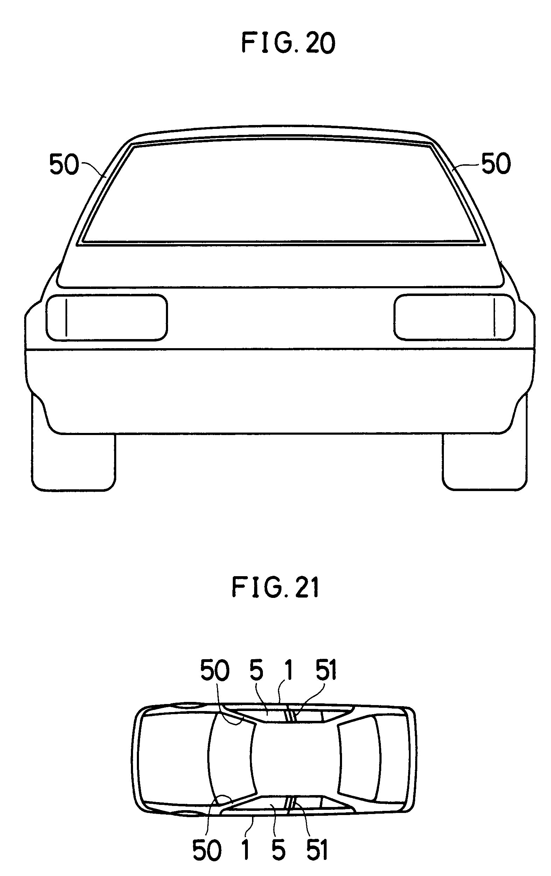

As is obvious from the above explanation, setting of the central axis X of curvature of the two-dimensional glass 5 slanted forwardly and downwardly in relation to a horizontal line extending lengthwise of a car body is intended to position the front edge upper part 5a of the door glass 5 nearer than the rear edge upper part 5B to the vertical plane of symmetry of the car body. In such a case, as shown in Fig. 18 and Fig. 19 a conspicuous tumble home design (the door glass 5 leans deeply inwardly of the car body at the upper part of a front pillar 50) is realized, with the result that outward appearance and aerodynamic characteristics can be improved. For comparison purposes of the outward appearance of automobiles, an automobile provided with the conventional windows with glass curved in a single dimension is shown in Fig. 20 and Fig. 21 which correspond to Fig. 18 and Fig. 19 respectively.

In the above case, as the central axis X of curvature of the glass 5 was set at a level near the boundary line between the door glass 5 and the door body 1, the surface of the door glass 5 is connected smoothly to the surface of the door body 1, with the result of formation of a beautiful body line.

Also, in the above case the door glass 5 in the region of the top part of the center pillar 51 is in almost the same position as in the case of a conventional automobile and therefore there is no fear that the shape worsens for the occupants.

Since the above door glass 5 is curved only in its up and down direction, no special consideration is required for the design and use of the door glass 5, the guide rails 8, 9 (or 35, 36), the door sash 4 (or 21), the driving means 10 (or 32), etc. as in the case of glass curved in two dimensions, and reliability of up-and-down motion, sealability, etc. is increased. Moreover, manufacturing cost of the door glass 5 is lower than that of glass curved in two dimensions.

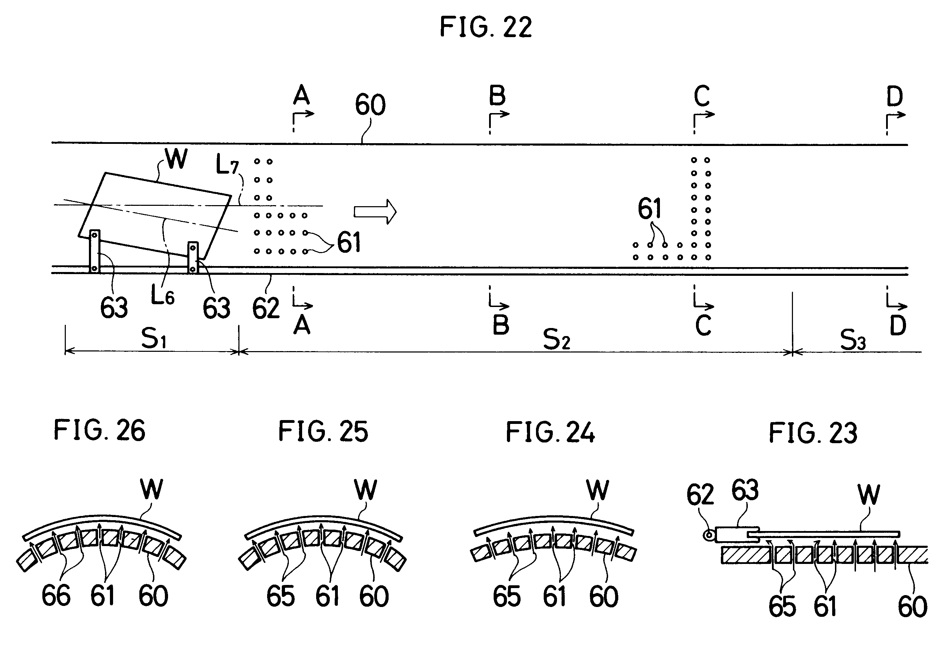

An example of the method of manufacturing the glass 5, especially a method of processing a flat glass into glass curved in a single dimension, is explained below, with reference to Fig. 22. In Fig. 22, reference numeral 60 designates a bed having the required width and extending in one direction. Many blowoff holes from which hot air and cool air are blown out are made in the bed 60 in checkered-shape. Reference numeral 62 designates a wire laid along a lengthwise direction of the bed 60. The wire 62 is so designed that it conveys a glass W grasped by clamps 63 on the bed 60 in the arrow direction. The bed 60 is formed in flat board-shape at the upstream side where a glass W is loaded (refer to Fig. 23) but is curved in transverse direction at the downstream portion or the curve forming area S₂ and its curvature is increased gradually toward the downstream end in the direction of conveying the glass W. At a cooling area S₃ which is adjacent the downstream portion of the curve forming area S₂ is also curved in transverse direction at almost the same curvature as the curvature at the downstream portion (refer to Fig. 26).

In the process, flat glass W of substantially parallelogram shape is placed on the bed 60 and after the flat glass W is grasped by the clamps 63, it is conveyed by the wire 62 to the side of the curve forming area S₂. When placing the flat glass W on the bed 60, it is placed on the bed 60 in the state that a center L₆ of the flat glass W is slanted in relation to a center line L₇ of the bed 60.

At the curve forming area S₂, the glass W on the bed 60 is heated by hot air 65 flown out of the blowoff holes 61. At this time, the glass W is put in such state that it keeps a certain clearance with the bed 60 by the hot air 65. As the bed 60 is formed in such a curved surface that the curvature grows larger gradually toward the downstream side in conveying direction of the glass W, the glass W is formed into a curved two-dimensional glass whose curvature is increased gradually as it is conveyed toward the downstream side of the curve forming area S₂.

At a cooling area S₃ of the bed 60, the glass W which has been curved in a single dimension is cooled abruptly and is strengthened by cooling air 66 blown out of the blowoff holes 61. This completes the curving process.

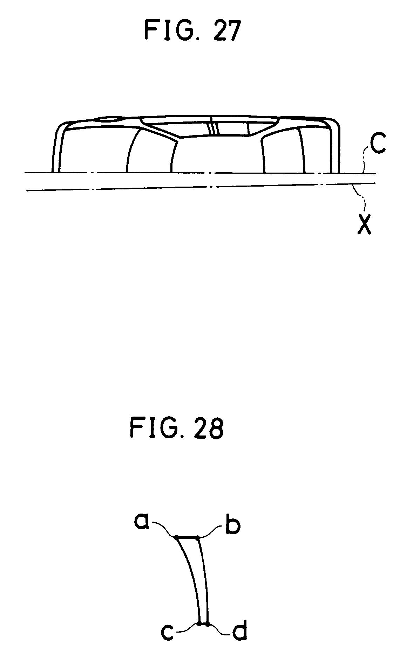

The present invention is not limited to the above first, second and third embodiments but includes other various modified embodiments. For example, in the door glass construction of the front side door in each of the above embodiments, the central axis X of curvature of the two-dimensional glass 5 is slanted forwardly and downwardly in relation to a horizontal line extending lengthwise of a car body but as shown in Fig. 27, it is possible to adopt an arrangement such that while the central axis X is slanted forwardly and downwardly, it is angled towards the vertical plane of symmetry C of a car body as it goes forwardly . In this case, the state of the door glass as seen from the front of a car body is as shown in Fig. 28, namely the whole front edge of the door glass is positioned more inwardly of a car body than the rear edge and has the effect of facilitating the processing of rounding from the windshield. In Fig. 28, corresponding symbols are given to four corner parts for the purpose of comparison with Fig. 17(b).

In each of the above embodiments, mention is made of the case where the present invention is applied to the door glass construction of the front side door of an automobile but the present invention is also applicable to the door glass construction of the rear side door of an automobile or to the glass construction (other than the door glass) to be provided at the side of a car body. In the case where the present invention is applied to the door glass construction of the rear side door, it is so designed that the central axis X of curvature of the door glass curved in a single dimension is slanted rearwardly and downwardly in relation to a horizontal line extending in the longitudinal direction of a car body (contrary to the case of the door glass construction of the front side door) and the rear edge upper part of the door glass can similarly be positioned nearer the vertical plane of symmetry C of a car body than a front edge upper part when the door glass is in its closed position.

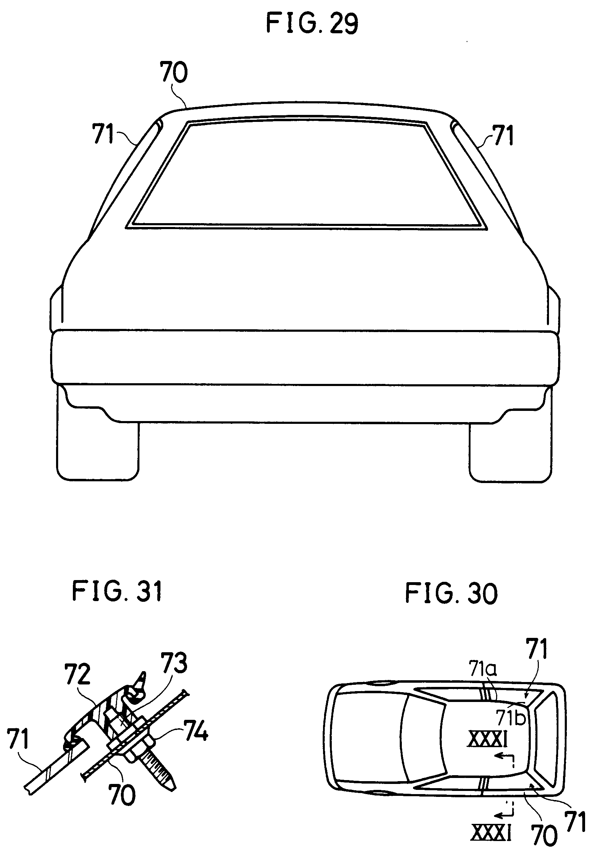

The present invention is also applicable to the glass construction for fixed windows. Figs. 29, 30 and 31 show an embodiment of this case which is applied to a rear quarter window glass. In the side of a rear part of a body 70 a stud bolt 73, together with a nut 74, is fixed at three portions. At the top of the three stud bolts 73, a quarter garnish 72 is fixed. Through the medium of this quarter garnish 72, a window glass 71 curved in a single dimension is fitted to the body 70. This quarter window glass 71 is so designed that it is set slanted rearwardly and downwardly in relation to a horizontal line extending in the longitudinal direction of a car body, and the rear edge upper corner part 71b of the quarter window glass 71 is positioned nearer than the front edge upper corner part 71a to the vertical plane of symmetry of the car.

In each of the above embodiments, the boundary line between the glass and the body at the underside of said glass is substantially horizontal but the present invention is also applicable to the case where the boundary line is not horizontal. In this case, the glass should be arranged so that the axis of curvature of the glass is inclined with respect to at least a line along one end edge of the glass and so that, of the front and rear edges of the glass one is positioned nearer the vertical plane of symmetry C of the car body than the other.

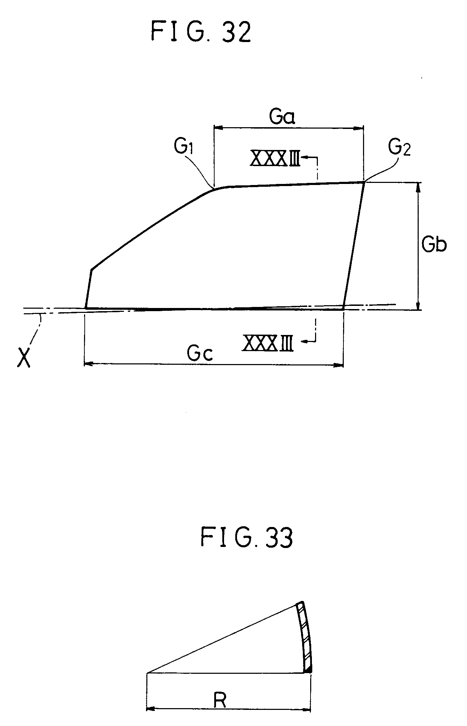

In each of the above drawings, in order to facilitate the understanding, an example of the case where the angle of inclination of the central axis X of curvature in relation to a horizontal line extending longitudinally of the car body is large is illustrated but as a matter of fact, a satisfactory effect can be obtained in practice even in the case of a smaller angle of inclination than the above. For example, in the case of those shown in Fig. 32 and Fig. 33 where Ga=500mm, Gb=400mm, Gc=1,000mm, radius of curvature R 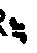 1,200mm and the angle of inclination 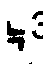 3 degrees, the point G₁ at the front edge upper part is positioned nearer to the longitudinal vertical plane of symmetry C of the car body than the point G₂ at the rear edge upper part by 10mm. In this case, aerodynamic characteristics and outward appearance usually obtained by the use of three-dimensional glass can be obtained satisfactorily. This dimension is varied by each value, G_{A}, G_{B}, G_{C}, R and the angle of inclination.

In each of the above embodiments, the door glass is notionally taken from a cylindrical shape but may be taken from a conical shape.

## Claims

1. In or for an automobile a side window construction comprising a glass (5) curved in a single dimension about an axis (X) characterized in that the glass (5) is mounted with said axis (X) extending generally lengthwise of the automobile but inclined forwardly and downwardly, and in that the intersection (a) of the front and top edges of the glass is nearer than the intersection (b) of the rear and top edges of the glass to the vertical plane of symmetry (C) of the automobile.

2. A side window construction as claimed in Claim 1, wherein the central axis of curvature (X) of the glass (5) is also inclined forwardly and towards the vertical plane of symmetry (C) of the automobile.

3. In or for an automobile a side window construction comprising a glass (5) curved in a single dimension about an axis characterized in that the glass (5) is mounted with said axis (X) extending generally lengthwise of the automobile but inclined rearwardly and downwardly and in that the intersection (71b) of the rear and top edges of the glass is nearer than the intersection (71a) of the front and top edges of the glass to the vertical plane of symmetry (C) of the automobile.

4. A side window construction as claimed in Claim 3, wherein the central axis (X) of the glass (5) is also inclined rearwardly and towards the vertical plane of symmetry (C) of the automobile.

5. A side window construction as claimed in Claim 3 or Claim 4, wherein the glass is a quarter window glass.

6. A side door for an automobile comprising a side window construction as claimed in any one of Claims 1 to 4, which side door comprises an outer panel (2) and an inner panel (3) and driving means (10) for causing said glass to move upward and downward along guide rails (8,9,35,36) in the door for guiding at least the front and rear edge of the glass, said two guide rails having a curvature substantially the same as that of the glass, the centers of curvature of the two guide rails being set at respective positions corresponding to vertical positions of the centers of curvature of the front and rear edges parts of the glass.

7. A side window construction as claimed in any one of the preceding claims wherein the central axis of curvature (X) of the glass (5) is disposed at a level near a generally horizontal boundary line between the glass and the automobile below the glass.

8. In or for an automobile a side window construction comprising a glass (5) curved in a single dimension about an axis (X) characterized in that at least the top edge of the glass is inclined with respect to lines parallel to the axis (X) whereby the intersections of said top edge with the front and rear edges of the glass are at different distances from the central vertical lengthwise plane of symmetry (C) of the automobile.

9. A side window construction as claimed in Claim 8, wherein said lines parallel to the axis (X) are also inclined at an angle to the vertical lengthwise plane (C) of symmetry of the automobile.

10. A side window construction as claimed in Claim 8 or Claim 9, comprising means for raising and lowering the glass, the condition that the intersections of said top edge with the front and rear edges of the glass are at different distances from the central vertical lengthwise plane of symmetry (C) of the automobile being attained when the glass is in a fully raised condition.

11. A side window construction as claimed in any one of Claims 8 to 10, wherein guides are provided for the front and rear edges of the glass.

12. A side window construction as claimed in any one of Claims 8 to 11, wherein said side window is a fixed quarter window.

## Patentansprüche

1. Gestaltung und Anordnung eines Seitenfensters eines Kraftfahrzeuges mit einer Glasscheibe (5), die in eine Richtung um eine Achse (X) gewölbt ist,
dadurch gekennzeichnet,
- daß die Glasscheibe (5) so montiert ist, daß die Achse (X) sich im wesentlichen in Längsrichtung des Fahrzeuges erstreckt, aber nach vorne und nach unten geneigt ist,
- und daß der Schnittpunkt (a) der Vorderkante und der Oberkante der Glasscheibe näher an der vertikalen Symmetrieebene (C) des Fahrzeuges angeordnet ist als der Schnittpunkt (b) der hinteren Kante und der Oberkante der Glasscheibe.

2. Gestaltung und Anordnung eines Seitenfensters nach Anspruch 1,
dadurch gekennzeichnet,
daß die Wölbungs-Hauptachse (X) der Glasscheibe (5) auch nach vorne und in Richtung der vertikalen Symmetrieebene (C) des Fahrzeuges geneigt ist.

3. Gestaltung und Anordnung eines Seitenfensters eines Kraftfahrzeuges mit einer Glasscheibe (5), die in eine Richtung um eine Achse gewölbt ist,
dadurch gekennzeichnet,
- daß die Glasscheibe (5) so montiert ist, daß die Achse (X) sich im wesentlichen in Längsrichtung des Fahrzeuges erstreckt, aber nach hinten und nach unten geneigt ist,
- und daß der Schnittpunkt (71b) der hinteren Kante und der Oberkante der Glasscheibe näher an der vertikalen Symmetrieebene (C) des Fahrzeuges angeordnet ist als der Schnittpunkt (71a) der Vorderkante und der Oberkante der Glasscheibe.

4. Gestaltung und Anordnung eines Seitenfensters nach Anspruch 3,
dadurch gekennzeichnet,
daß die Hauptachse (C) der Glasscheibe (5) auch nach hinten und in Richtung der vertikalen Symmetrieebene (C) des Fahrzeuges geneigt ist.

5. Gestaltung und Anordnung eines Seitenfensters nach Anspruch 3 oder Anspruch 4,
dadurch gekennzeichnet,
daß die Glasscheibe eine hintere Seitenscheibe ist.

6. Seitentür eines Kraftfahrzeuges mit der Gestaltung und Anordnung des Seitenfensters nach einem der Ansprüche 1 bis 4,
dadurch gekennzeichnet,
- daß die Seitentür eine äußere Wand (2) und eine innere Wand (3) sowie eine Fensterhebevorrichtung (10) aufweist, mittels der die Glasscheibe nach oben und nach unten bewegbar ist entlang von Führungsschienen (8, 9, 35, 36) in der Tür, die zumindest die Vorderkante und die hintere Kante der Glasscheibe führen,
- und daß die Führungsschienen im wesentlichen die gleiche Wölbung wie die Glasschiebe besitzen und die Wölbungs-Hauptachsen der beiden Führungsschienen entsprechend positioniert sind wie die vertikalen Positionen der Wölbungs-Hauptachsen der Vorder- und Hinterkanten der Glasscheibe.

7. Gestaltung und Anordnung eines Seitenfensters nach einem der vorhergehenden Ansprüche
dadurch gekennzeichnet,
daß die Wölbungs-Hauptachse (X) der Glasscheibe (5) in der Nähe einer im wesentlichen horizontal verlaufenden Trennungslinie zwischen der Glasscheibe und dem Fahrzeugteil unterhalb der Glasscheibe angeordnet ist.

8. Gestaltung und Anordnung eines Seitenfensters eines Kraftfahrzeuges mit einer Glasscheibe (5), die in eine Richtung um die Achse (X) gewölbt ist,
dadurch gekennzeichnet,
daß zumindest die Oberkante der Glasscheibe geneigt ist gegenüber Linien, die parallel zu der Achse (X) verlaufen, wodurch die Schnittpunkte der Oberkante mit der vorderen und der hinteren Kante der Glasscheibe unterschiedliche Abstände zu der vertikalen, in Längsrichtung sich erstreckenden Hauptsymmetrieebene (C) des Fahrzeuges aufweisen.

9. Gestaltung und Anordnung eines Seitenfensters nach Anspruch 8,
dadurch gekennzeichnet,
daß die Linien, die parallel zu der Achse (X) verlaufen,auch unter einem Winkel zu der vertikalen Symmetrielängsebene (C) des Fahrzeuges geneigt sind.

10. Gestaltung und Anordnung eines Seitenfensters nach Anspruch 8 oder Anspruch 9,
dadurch gekennzeichnet,
- daß eine Fensterhebevorrichtung zum Anheben und Absenken der Glasscheibe vorhanden ist,
- und daß die Bedingung, daß die Schnittpunkte der Oberkante mit der vorderen und hinteren Kante der Glasscheibe unterschiedliche Abstände von der vertikalen, in Längsrichtung sich erstreckenden Hauptsymmetrieebene (C) des Fahrzeuges aufweisen, dann erreicht ist, wenn sich die Glasscheibe in der vollständig angehobenen Position befindet.

11. Gestaltung und Anordnung eines Seitenfensters nach einem der Ansprüche 8 bis 10,
dadurch gekennzeichnet,
daß für die vordere und hintere Kante der Glasscheibe Führungsschienen vorgesehen sind.

12. Gestaltung und Anordnung eines Seitenfensters nach einem der Ansprüche 8 bis 11,
dadurch gekennzeichnet,
daß das Seitenfenster ein hinteres Seitenfenster ist.

## Revendications

1. Dans ou pour une automobile, une construction de fenêtre latérale comprenant une vitre (5) courbée dans une seule dimension autour d'un axe (X), caractérisée en ce que la vitre (5) est montée de façon que ledit axe (X) s'étende de façon générale selon la direction de la longueur de l'automobile mais soit incliné vers l'avant et vers le bas et en ce que l'intersection (a) des bords avant et supérieur de la vitre est plus proche du plan de symétrie vertical (C) de l'automobile que l'intersection (b) des bords arrière et supérieur de la vitre.

2. Construction de fenêtre latérale selon la revendication 1, dans laquelle l'axe central de courbure (X) de la vitre (5) est aussi incliné vers l'avant et vers le plan de symétrie vertical (C) de l'automobile.

3. Dans ou pour une automobile, une construction de fenêtre latérale comprenant une vitre (5) courbée dans une seule dimension autour d'un axe, caractérisée en ce que la vitre (5) est montée de façon que ledit axe (X) s'étende de façon générale selon la direction de la longueur de l'automobile mais soit incliné vers l'arrière et vers le bas et en ce que l'intersection (71b) des bords arrière et supérieur de la vitre est plus proche du plan de symétrie vertical (C) de l'automobile que l'intersection (71a) des bords avant et supérieur de la vitre.

4. Construction de vitre latérale selon la revendication 3, dans laquelle l'axe central (X) de la vitre (5) est aussi incliné vers l'arrière et vers le plan de symétrie vertical (C) de l'automobile.

5. Construction de vitre latérale selon la revendication 3 ou la revendication 4, dans laquelle la vitre est une vitre de fenêtre de custode.

6. Porte latérale pour une automobile comprenant une construction de fenêtre latérale selon une quelconque des revendications 1 à 4, laquelle porte latérale comprend un panneau extérieur (2) et un panneau intérieur (3) et des moyens d'entraînement (10) servant à faire monter et descendre ladite vitre dans la porte le long de glissières (8, 9, 35, 36) pour guider au moins le bord avant et le bord arrière de la vitre, les deux glissières précitées ayant une courbure pratiquement identique à celle de la vitre, les centres de courbure des deux glissières étant placés dans des positions respectives qui correspondent aux positions en hauteur des centres de courbure des parties de bord avant et de bord arrière de la vitre.

7. Construction de vitre latérale selon une quelconque des revendications précédentes, dans laquelle l'axe central de courbure (X) de la vitre (5) est disposé à un niveau proche d'une ligne limite à peu près horizontale entre la vitre et la partie de l'automobile située au-dessous de la vitre.

8. Dans ou pour une automobile, une construction de fenêtre latérale comprenant une vitre (5) courbée dans une seule dimension autour d'un axe (X), caractérisée en ce qu'au moins le bord supérieur de la vitre est incliné par rapport à des lignes parallèles à l'axe (X), de telle manière que les intersections dudit bord supérieur et desdits bords avant et arrière de la vitre se trouvent à différentes distances du plan de symétrie longitudinal vertical central (C) de l'automobile.

9. Construction de vitre latérale selon la revendication 8, dans laquelle lesdites lignes parallèles à l'axe (X) sont aussi inclinées d'un certain angle sur le plan de symétrie longitudinal vertical (C) de l'automobile.

10. Construction de fenêtre latérale selon la revendication 8 ou la revendication 9, comprenant des moyens servant à lever et descendre la vitre, la condition consistant en ce que les intersections dudit bord supérieur et des bords avant et arrière de la vitre se trouvent à différentes distances du plan de symétrie longitudinal vertical central (C) de l'automobile étant obtenue lorsque la vitre est à l'état entièrement levé.

11. Construction de fenêtre latérale selon une quelconque des revendications 8 à 10, dans laquelle des guides sont prévus pour les bords avant et arrière de la vitre.

12. Constructlon de fenêtre latérale selon une quelconque des revendications 8 à 11, dans laquelle ladite fenêtre latérale est une fenêtre de custode fixe.
